# EUROPÄISCHE PATENTANMELDUNG

(11) **EP 1 284 271 A1**
(43) Veröffentlichungstag der Anmeldung: **19.02.2003**
(21) Anmeldenummer: 02016983.5
(22) Anmeldetag: 05.08.2002
(51) Int. Cl.: C07F 19/00, C07F 15/00

(54) **Katalysatoren für die Olefinpolymerisation**

(30) Priorität: 16.08.2001 DE 10140203
(71) Anmelder: BAYER AG, 51368 Leverkusen (DE)
(72) Erfinder: Arndt-Rosenau, Michael, Dr., 41539 Dormagen (DE); Hoch, Martin, Dr., 52525 Heinsberg (DE); Sundermeyer, Jörg, Prof. Dr., 35041 Marburg (DE); Kipke, Jennifer, Dr., 68167 Mannheim (DE)

(57) **Zusammenfassung**

Die vorliegende Erfindung betrifft Diimin-Übergangsmetall-Verbindungen die Arylgruppen mit elektronenziehendem/elektronenziehenden Substituent(en) aufweisen, Zusammensetzungen enthaltend Diimin-Übergangsmetall-Verbindungen Verbindungen die Arylgruppen mit elektronenziehendem/elektronenziehenden Substituent(en) aufweisen, welche sich insbesondere als Katalysatoren eignen für die Polymerisation von Olefinen, insbesondere die Ethen/Propen bzw. Ethen/α-Olefin Copolymerisation.

## Beschreibung

Die vorliegende Erfindung betrifft Diimin-Übergangsmetall-Verbindungen die Arylgruppen mit elektronenziehendem/elektronenziehenden Substituent(en) aufweisen, sowie Zusammensetzungen enthaltend Diimin-Übergangsmetall-Verbindungen, welche sich insbesondere als Katalysatoren eignen für die Polymerisation von Olefinen, insbesondere die Ethen/Propen bzw. Ethen/α-Olefin Copolymerisation.

WO-96/23010-A2 beschreibt die Verwendung von Übergangsmetallkomplexen auf Basis von Diimin-Liganden für die Polymerisation von Olefinen und die Copolymerisation von Olefinen mit polaren Monomeren. Das Patent lehrt, dass [Diimin]Niund Pd-Komplexe auf Basis aromatischer Amine wie Anilin oder p-Methylanilin bei der Umsetzung mit Ethen lediglich Oligomere ergeben (S. 94,136). Für die Synthese von Polymeren müssen o- bzw. o,o'-substituierte Aniline eingesetzt werden.

WO-98/40374-A2 beschreibt entsprechende Komplexe mit elektronenziehenden Substituenten an der Verbrückung des Chelatliganden.

M. Brookhart und C.M. Killian et al. schreiben in Organometallics 16, (1997), 2005-2007: "We reasoned by eliminating the steric bulk of the ortho-substituents, rates of associate chain transfer should be substantially increased, resulting in oligomerization rather than polymerization reactions." und tatsächlich werden bei Verwendung von Diiminen des Anilins oder p-Methylanilins lediglich Oligomere erhalten.

Detaillierte Untersuchungen hierzu beschreiben Brookhart et al. in Organometallics 18 (1999), 65-74 und Brookhart und Killian et al. in Macromolecules 33, (2000), 2320-2334 . Hier kommen sie zu dem Schluß:"(1) As the bulk of the ortho aryl substituents on the α-diimine increases, the molecular weight of the polyethylenes increases. With mono ortho substituted aryl diimine catalysts Mn values as low as ca. 1000 are seen...(2) Increased steric bulk of the ortho substituents also increases...the turnover frequencies.".

L.K. Johnson und C.M. Killian schreiben (in J.Sheirs, W.Kaminsky: Metallocenebased Polyolefins Volume One, Kapitel 11; J. Wiley&Sons: New York (1999)): "...key features of the α-diimine polymerization catalysts are...the incorporation of bulky α-diimine Ligands".

Diese Aussagen führen zu dem Schluss, dass Diimine ohne sperrige ortho-Substituenten als Katalysatoren in der Olefinpolymerisation mit niedriger Aktivität Oligomere produzieren.

Da der Einbau von Monomeren mit größeren sterischen Anspruch als Ethen durch große Substituenten in ortho-Position behindert wird, besteht jedoch ein Interesse an der Entwicklung von Polymerisationskatalysatoren, die keine ortho-Substituenten am Diimin tragen.

Überraschenderweise wurde gefunden, dass Diimine ohne ortho-Substituenten, die elektronenziehende Substituenten am Anilinfragment aufweisen die Polymerisation von Ethen mit hohen Aktivitäten katalysieren.

Gegenstand der Erfindung sind also Diimin-Übergangsmetall-Verbindungen die Arylgruppen mit elektronenziehendem/elektronenziehenden Substituent(en) aufweisen, insbesondere eine Verbindung der allgemeinen Formel (I) 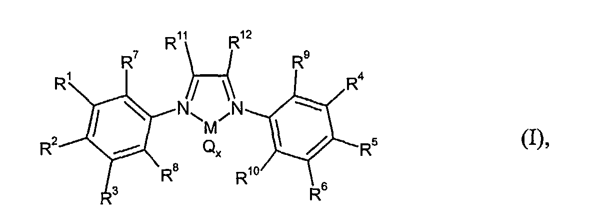 wobei
- M: ausgewählt wird aus Mangan, Eisen, Ruthenium, Kobalt, Rhodium, Nickel, Palladium und Kupfer,
- Q: ein mono-anionischer oder nicht-anionischer Ligand ist,
- R¹, R², R³, R⁴, R⁵, R⁶: unabhängig voneinander ausgewählt sind aus der Gruppe bestehend aus elektronenziehender Substituent, Wasserstoff, gegebenenfalls substituierte C₁-C₁₀-Alkylgruppen, gegebenenfalls substituierter C₆-C₁₄-Arylreste und wobei gegebenenfalls ein oder mehrere R¹ bis R⁶ Teile eines Ringsystems sein können, wobei mindestens eine dieser Gruppen, bevorzugt jedoch mehrere, besonders bevorzugt mehr als 3 der Gruppen, ein elektronenziehender Substituent (ein Substituent der die Elektronendichte des Aromaten erniedrigt) ist,
- R⁷, R⁸, R⁹, R¹⁰: unabhängig voneinander gewählt werden aus Wasserstoff, Halogen-, C₁-C₁₀-Alkyl, wobei jedoch mindestens zwei der Gruppen Wasserstoff oder Halogen sind,
- R¹¹ und R¹²: unabhängig voneinander ausgewählt werden aus Wasserstoff, Halogen, substituierter C₁-C₁₀-Alkylgruppe, substituierter C₆-C₁₄-Arylrest und wobei gegebenenfalls ein oder mehrere R¹ bis R⁶ Teile eines Ringsystems sein können oder aber über Heteroatome an die Imin-Kohlenstoffe gebunden sind,
- x: eine ganze Zahl im Bereich von 1 bis 3 darstellt.

Bevorzugt sind 3 oder 4 der Gruppen R⁷, R⁸, R⁹, R¹⁰ Wasserstoff, besonders bevorzugt alle vier.

Als elektronenziehende Substituenten kommen sämtliche dem Fachmann bekannten Gruppen in Frage, die die Elektronendichte der entsprechenden Arylgruppe erniedrigen, wie Halogen-, halogenierte Alkylgruppen, Nitro-, Cyano-, Carbonyl- und Carboxylgruppen.

Bevorzugt werden Halogen- und perhalogenierte Alkylgruppen als elektronenziehende Substituenten eingesetzt. Besonders bevorzugt sind Chlor-, Brom-, Iod- und perfluorierte Alkyl-Substituenten.

Als mono-anionischer oder nicht-ionischer Ligand Q können sämtliche dem Fachmann bekannten Liganden, die sich mit der Metallkomplexkation bildenden Verbindung unter Bildung nicht- oder schwach-koordinierender Anionen abstrahieren lassen, eingesetzt werden. Die Q können gleich oder verschieden sein, eine oder mehrere der beiden Gruppierungen Q können auch verbrückt sein. Bevorzugt wird Q ausgewählt aus Halogenid, besonders Chlorid und Bromid, Hydrid oder Methyl, Ethyl, Butyl. Für nicht- oder schwach-koordinierende Anionen verweisen wir auf W. Beck et al., Chem. Rev. 88, 1405-1421 (1988) und S. Strauss 93, 927-42 (1993).

Im Regelfall wird Q ausgewählt aus Halogenid, Hydrid, C₁- bis C₁₀-Alkyl oder -Alkenyl, C₆-C₁₀-Cycloalkyl, C₆- bis C₁₄-Aryl, Alkylaryl mit C₁- bis C₁₀-Gruppierung im Alkylrest und C₆- bis C₁₄-Gruppierung im Arylrest, -OR¹³, OR¹³R¹⁴, -NR¹⁵R¹⁶, NR¹⁵R¹⁶R¹⁷, -PR¹⁵R¹⁶, -PR¹⁵R¹⁶R¹⁷, und wobei R¹³ bis R¹⁷ aus H, C₁- bis C₁₀-Alkyl, C₆- bis C₁₀-Cycloalkyl, C₆- bis C₁₄-Aryl, Alkylaryl oder Arylalkyl ausgewählt sein kann und gleich oder verschieden sein können.

Unter Halogen versteht der Fachmann Fluor, Chlor, Brom oder Jod, bevorzugt sind Chlor und Brom.

Unter C₁-C₁₀-Alkyl werden sämtliche dem Fachmann bekannte lineare oder verzweigte Alkylreste mit 1 bis 10 C-Atomen verstanden, wie Methyl, Ethyl, n-Propyl, i-Propyl, n-Butyl, i-Butyl, t-Butyl, n-Pentyl, i-Pentyl, neo-Pentyl und Hexyl, Heptyl, Oktyl, Nonyl und Decyl, die ihrerseits wiederum substituiert sein können. Als Substituenten kommen hierbei Halogen, Nitro, Hydroxyl, oder auch C₁-C₁₀-Alkyl, sowie C₆-C₁₄-Cycloalkyl oder -Aryl in Frage, wie Benzoyl, Trimethylphenyl, Ethylphenyl, Chlormethyl, Chlorethyl und Nitromethyl.

Unter C₆-C₁₄- Cycloalkyl werden sämtliche dem Fachmann bekannte ein- oder mehrkernige Cycloalkylreste mit 6 bis 14 C-Atomen verstanden, wie Cyclohexyl, Cycloheptyl, Cyclooctyl und Cyclononyl oder auch teil- oder vollhydriertes Fluorenyl, die ihrerseits wiederum substituiert sein können. Als Substituenten kommen hierbei Halogen, Nitro, C₁-C₁₀-Alkoxy oder auch C₁-C₁₀-Alkyl, sowie C₆-C₁₂-Cycloalkyl oder -Aryl in Frage, wie Methylcyclohexyl, Chlorcyclohexyl und Nitrocyclohexyl.

Unter C₆-C₁₄-Aryl werden sämtliche dem Fachmann bekannte ein- oder mehrkernige Arylreste mit 6 bis 14 C-Atomen verstanden, wie Phenyl, Naphthyl, Fluorenyl, die ihrerseits wiederum substituiert sein können. Als Substituenten kommen hierbei Halogen, Nitro, C₁-C₁₀-Alkoxy oder auch C₁-C₁₀-Alkyl, sowie C₆-C₁₄-Cycloalkyl oder -Aryl in Frage, wie Bromphenyl, Chlorphenyl, Toloyl und Nitrophenyl.

Unter Aryl werden sämtliche dem Fachmann bekannte ein- oder mehrkernige Arylreste mit 6 bis 14 C-Atomen verstanden, wie Phenyl, Naphthyl, Anthracenyl, Phenanthrenyl, und Fluorenyl, die ihrerseits wiederum substituiert sein können. Als Substituenten kommen hierbei Halogen, Nitro oder auch Alkyl oder Alkoxyl, sowie Cycloalkyl oder Aryl in Frage, wie Bromphenyl, Chlorphenyl, Toluyl und Nitrophenyl.

Unter Alkyl werden sämtliche dem Fachmann bekannte lineare oder verzweigte Alkylreste mit 1 bis 50 C-Atomen verstanden, wie Methyl, Ethyl, n-Propyl, i-Propyl, n-Butyl, i-Butyl t-Butyl, n-Pentyl, i-Pentyl, neo-Pentyl, Hexyl und die weiteren Homologen, die ihrerseits wiederum substituiert sein können. Als Substituenten kommen hierbei Halogen, Nitro, oder auch Alkyl oder Alkoxy, sowie Cycloalkyl oder Aryl in Frage, wie Phenyl, Trimethylphenyl, Ethylphenyl, Chlormethyl, Chlorethyl und Nitromethyl. Bevorzugt werden Methyl, Ethyl, n-Propyl, i-Propyl, n-Butyl, i-Butyl, t-Butyl und Benzoyl.

Besonders bevorzugt stehen in Formel (I)
- M: für Ni oder Pd,
- Q: für Chlorid, Bromid oder Methyl,
- R¹, R³, R⁴, R⁶: unabhängig voneinander für Halogen, Perhalogenalkyl-
- R² und R⁵: für Wasserstoff, Alkyl oder Aryl
- R⁷, R⁸, R⁹, R¹⁰: für Wasserstoff
- R¹¹, R¹²: für Wasserstoff, Alkyl oder Ringe
- x: gleich 2 oder 3.

Weiterhin betrifft die Erfindung Zusammensetzungen enthaltend eine Diimin-Übergangsmetall-Verbindung die Arylgruppen mit elektronenziehendem/elektronenziehenden Substituent(en) aufweist und wenigstens eine Metallkomplexkation-bildende Verbindung.

Die Diimin-Übergangsmetall-Verbindung oder die Diimin-Übergangsmetall-Verbindungen werden im Bereich von 10⁻¹⁰ bis 10⁻¹ mol-% bezogen auf die (Gesamt-)-Monomerkonzentration, bevorzugt im Bereich von 10⁻⁸ bis 10⁴ mol-% eingesetzt. Die günstigste Konzentration ist durch wenige Vorversuche leicht zu ermitteln.

Als Metallkomplexkation-bildende Verbindung können beispielsweise offenkettige oder cyclische Aluminoxanverbindungen eingesetzt werden, die bevorzugt der allgemeinen Formel II oder III genügen, 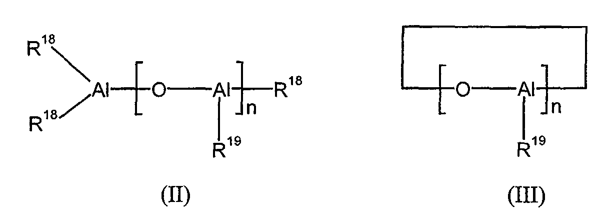 wobei
- R¹⁸ und R¹⁹: eine C₁- bis C₈-Alkylgruppe bedeutet, vorzugsweise eine Methyl- oder Ethylgruppe, und n für eine ganze Zahl von 3 bis 30, bevorzugt 10 bis 25 steht.

Die Herstellung dieser oligomeren Aluminoxanverbindungen erfolgt üblicherweise durch Umsetzung einer Trialklyaluminiumlösung mit Wasser und ist u.a. in EP-A1-0 284 708 beschrieben. In der Regel liegen die auf diese Weise erhaltenen oligomeren Aluminoxanverbindungen als Gemische unterschiedlich langer, sowohl linearer als auch cyclischer Moleküle vor, so dass n als Mittelwert anzusehen ist. Diese Aluminoxanverbindungen können auch im Gemisch mit anderen Metallalkylen, bevorzugt mit Aluminiumalkylen vorliegen.

Es hat sich als vorteilhaft erwiesen, die Verbindung der allgemeinen Formel (I) und die oligomere Aluminoxanverbindung in solchen Mengen einzusetzen, dass das molare Verhältnis zwischen Aluminium aus der Aluminoxankomponente und dem aus (I) im Bereich von 1:1 bis 20000:1, insbesondere im Bereich von 10:1 bis 2000:1, liegt.

Als Metallkomplexkation-bildende Verbindung können aber auch offenkettige Koordinationskomplexverbindungen eingesetzt werden, ausgewählt aus der Gruppe der starken, neutralen Lewis-Säuren, der ionischen Verbindungen mit Lewis-sauren Kationen oder Brönstedt-sauren Kationen und nicht-koordinierenden Anionen.

Als starke neutrale Lewis-Säuren sind Verbindungen der allgemeinen Formel IV bevorzugt, in der

M²X¹X²X³ (IV)

- M²: ein Element der Gruppe 3 bedeutet, insbesondere B, Al oder Ga, vorzugsweise B,
- X¹, X² und X³: für H, C₁- bis C₁₀-Alkyl, C₁- bis C₁₄-Cycloalkyl, C₆- bis C₁₄-Aryl, Alkylaryl, Arylalkyl, Halogenalkyl, Halogenaryl, Halogenalkylaryl oder Halogenarylalkyl mit jeweils C₁- bis C₁₀-Alkyl-, C₆- bis C₁₄-Cycloalkyl- und C₆- bis C₁₄-Arylresten oder/und Fluor, Chlor, Brom oder Jod stehen, insbesondere für Halogenaryle, vorzugsweise perfluorsubstituiert.

Besonders bevorzugt im Sinne der Erfindung werden jedoch Verbindungen der allgemeinen Formel (IV), in der X¹, X² und X³ gleich sind, vorzugsweise Tris(pentafluorophenyl)boran eingesetzt. Diese Verbindungen sowie Verfahren zu ihrer Herstellung sind an sich bekannt und u.a. in WO-93/03067-A1 beschrieben. Weiterhin besonders bevorzugt werden Aluminiumtrialkyle und -dialkylhydride, wie Trimethylaluminium, Triethylaluminium, Triisobutylaluminium, Trioctylaluminium, Diisobutylaluminiumhydrid, sowie Dialkylaluminiumhalogenide und Alkylaluminiumdichloride und Mischungen dieser Komponenten.

Als ionische Verbindungen mit Lewis- oder Brönstedt-sauren Kationen und nicht-koordinierenden Anionen sind Verbindungen der allgemeinen Formel V geeignet,

[L]^{d+}[(M²)^{m+}A₁A₂ ... Aₖ]^{d-} (V)

wobei
- L: ein Lewis-saures Kation gemäß der Lewis-Säure-Base-Theorie bedeutet, vorzugsweise Carbonium-, Oxonium-, oder/und Sulfoniumkationen sowie kationische Übergangsmetallkomplexe, insbesondere Triphenylmethylkation, Silberkation oder Ferrocenylkation, oder L ein Brönstedt-saures Kation gemäß der Brönstedt-Säure-Base-Theorie bedeutet, bevorzugt Trialkylammonium-, Dialkylarylammonium-, oder/und Alkyldiarylammonium, insbesondere N,N-Dimethylanilinium,
- M²: ein Element der Gruppe 3 bedeutet, insbesondere B, Al oder Ga, vorzugsweise B,
- A₁ bis Aₙ: für einfach negativ geladene Reste steht wie Hydrid, C₁- bis C₂₈-Alkyl, C₆- bis C₁₄-Cycloalkyl, C₆- bis C₁₄-Aryl, Alkylaryl, Arylalkyl, Halogenalkyl, Halogenaryl, Halogenalkylaryl oder Halogenarylalkyl mit jeweils C₁- bis C₂₈-Alkyl-, C₁- bis C₁₄-Cycloalkyl- und C₆- bis C₁₄-Arylresten, oder Halogen, Alkoxid, Aryloxid oder Organometalloid steht, und A₁ bis Aₙ gleich oder verschieden sind,
- d: eine ganze Zahl von 1 bis 6 bedeutet und d = n-m ist,
- k: für ganze Zahlen von 2 bis 8 steht, und
- m: eine ganze Zahl von 1 bis 6 ist.

Bevorzugte Anionen [(M²)^{m+}A₁A₂ ... Aₖ]^{d-} der allgemeinen Formel V sind jene, in der A₁ bis Aₖ gleich, raumerfüllende, perfluorosubstituierte, aromatische Kohlenwasserstoffreste sind und M² gleich Bor oder Aluminium ist, insbesondere Tetrakis(pentafluorophenyl)borat.

Es hat sich als vorteilhaft erwiesen, die Verbindung der allgemeinen Formel (I) und die Verbindung der allgemeinen Formeln (IV) oder (V) in solchen Mengen einzusetzen, dass das molare Verhältnis zwischen M² aus (IV) oder (V) und M aus (I) im Bereich von 0,25:1 bis 1:40, insbesondere im Bereich von 1:1 bis 1:10, liegt.

Es können selbstverständlich auch Mischungen unterschiedlicher Verbindungen der allgemeinen Formel (I) sowie Mischungen unterschiedlicher Metallkomplexkationbildender Verbindungen eingesetzt werden.

Gegebenfalls kann weiterhin ein Alkylierungsmittel eingesetzt werden, wobei die relativen molaren Verhältnisse zwischen der Diimin-Übergangsmetall-Verbindung, einer Verbindung der allgemeinen Formeln (IV) oder (V) sowie des Alkylierungsmittels bevorzugt im Bereich von 1:0,25:2 bis 1:40:10000, besonders bevorzugt im Bereich von 1:1:10 bis 1:5:1000 liegt.

Als Alkylierungsmittel können beispielsweise Aluminiumverbindungen eingesetzt werden, die der allgemeinen Formel (VI) genügen,

Al(R²⁰)₃₋ⱼ(X⁴)ⱼ (VI)

wobei
- R²⁰: eine C₁- bis C₈-Alkylgruppe bedeutet, vorzugsweise eine Methyl-, Ethyl- und i-Butylgruppe, und n für eine ganze Zahl von 3 bis 30, bevorzugt 10 bis 25 steht,
- X⁴: Fluor, Chlor, Brom oder Jod, bevorzugt Chlor steht, und
- j: eine ganze Zahl zwischen 0 und 2 darstellt.

Die erfindungsgemäßen Diimin-Verbindungen und Zusammensetzungen eigenen sich als Katalysatoren, insbesondere als Katalysatoren für die Polymerisation von Olefinen, insbesondere die Ethen Homo- bzw. Ethen/α-Olefin-Copolymerisation. Ein weiterer Gegenstand der Erfindung ist daher die Verwendung der erfindungsgemäßen Diimin-Verbindungen und/oder Zusammensetzungen als Katalysatoren, insbesondere für die Homo- und Copolymerisation von Olefinen, wie Ethen, Propen, 1-Buten, 2-Buten, Isobuten, 1-Penten, 1-Hexen, 4-Methyl-1-penten, 1-Hepten, 3-Methyl-1-Hexen, 1-Okten, Cyclopenten, Norbornen, insbesondere die Ethen Homo- und bzw. Ethen/α-Olefin Copolymerisation.

Zur Herstellung eines Katalysators kann es vorteilhaft sein, die erfindungsgemäßen Diimin-Verbindungen und/oder Zusammensetzungen auf einen Träger aufzubringen.

Als Trägermaterialien werden bevorzugt teilchenförmige, organische oder anorganische Feststoffe, deren Porenvolumen zwischen 0,1 und 15 ml/g beträgt, bevorzugt zwischen 0,25 und 5 ml/g, deren spezifische Oberfläche größer als 1 ist, bevorzugt 10 bis 1000 m²/g (BET), deren Korngröße zwischen 10 und 2500 µm beträgt, bevorzugt zwischen 50 und 1000 µm, und die an ihrer Oberfläche in geeigneter Weise modifiziert sein können, eingesetzt.

Die spezifische Oberfläche wird in üblicher Weise bestimmt nach Brunauer, Emmet und Teller, *J. Anorg. Chem. Soc.* 1938, *60*, 309, das Porenvolumen durch die Zentrifugationsmethode nach McDaniel, *J. Colloid Interface Sci.* 1980, *78*, 31 und die Teilchengröße nach Comillaut, *Appl. Opt.* 1972, *11*, 265.

Als geeignete anorganische Feststoffe seien beispielsweise genannt, ohne die vorliegende Erfindung jedoch einschränken zu wollen: Silicagele, Fällungskieselsäuren, Tone, Alumosilikate, Talkum, Zeolithe, Ruß, anorganische Oxide, wie beispielsweise Siliciumdioxid, Aluminiumoxid, Magnesiumoxid, Titandioxid, anorganische Chloride, wie beispielsweise Magnesiumchlorid, Natriumchlorid, Lithiumchlorid, Calciumchlorid, Zinkchlorid, oder Calciumcarbonat. Die genannten, anorganischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 21, S. 439 ff (Silicagele), Band 23, S. 311 ff (Tone), Band 14, S. 633 ff (Ruße) und Band 24, S. 575 ff(Zeolithe).

Als organische Feststoffe eignen sich pulverförmige, polymere Materialien, bevorzugt in Form frei fließender Pulver, mit den obengenannten Eigenschaften. Beispielhaft seien genannt, ohne die vorliegende Erfindung einschränken zu wollen: Polyolefine, wie beispielsweise Polyethen, Polypropen, Polystyrol, Polystyrol-*co*-divinylbenzol, Polybutadien, Polyether, wie beispielsweise Polyethylenylenoxid, Polyoxytetramethylen oder Polysulfide, wie beispielsweise Poly-*p*-phenylensulfid. Besonders geeignete Materialien sind Polypropylen, Polystyrol oder Polystyrol-*co*-divinylbenzol. Die genannten organischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 19, S. 195 ff (Polypropylen), und Band 19, S. 265 ff (Polystyrol).

Die Herstellung des geträgerten Katalysators kann in einem weiten Temperaturbereich erfolgen, beispielsweise durch Vermischen einer Lösung der erfindungsgemäßen Diimin-Verbindungen und/oder Zusammensetzungen in einem inerten Lösungsmittel/Lösungsmittelgemisches mit dem gegebenenfalls vorbehandelten Trägermaterial und anschließendem Entfernen des Lösungsmittels/-gemisches.

Im allgemeinen liegt daher die Herstelltemperatur zwischen Schmelz- und Siedepunkt des inerten Lösungsmittelgemisches. Üblicherweise wird bei Temperaturen von -50 bis +200°C, bevorzugt -20 bis 100°C, besonders bevorzugt 20 bis 60°C, gearbeitet.

Die Erfindung betrifft weiterhin ein Verfahren zur Homo- oder Co-Polymerisation von Olefinen, bevorzugt Ethen, Propen, Isobuten, 1-Buten, 2-Buten, 1-Hexen, 1-Octen, 4-Methyl-1-penten, ungesättigten alicyclischen Verbindungen wie z.B. Cyclopenten, Norbornen, ein Verfahren zur Co-Polymerisation dieser Monomere mit einem oder mehreren Dienen, bevorzugt Ethylidennorbornen, Vinylnorbornen, Dicyclopentadien, 1,4-Hexadien sowie ein Verfahren zur Co-Polymerisation der bereits aufgezählten Olefinen mit polaren Monomeren bevorzgut Acrylnitril, Methacrylnitril, Acrylaten, Methacrylaten und Vinylacetat. Besonders bevorzugte polare Monomere sind Acrylnitril, Methacrylnitril, Methylacrylat, Butylacrylat, Methylmethacrylat, Butylmethacrylat und Vinylacetat. Die Erfindung betrifft des weiteren ein Verfahren zur Homo- und Copolymerisation von konjugierten Dienen wie Butadien und Isopren sowie deren Copolymerisation mit Olefinen, alicyclischen Olefinen, Styrol und Styrolderivaten, sowie polaren Vinylmonomeren, wie z.B. Acrylnitril, Methylacrylat, Butylacrylat, Methylmethacrylat.

Die Polymerisation erfolgt bevorzugt indem man die α-Olefine mit dem erfindungsgemäßen Katalysators gelöst oder las Suspension mit dem geträgerten Katalysator in geeigneten Lösungsmitteln, gasförmig, flüssig in feiner Verteilung oder suspendiert in flüssigem Verdünnungsmittel in Berührung bringt.

Den gasförmigen, flüssigen oder versprühten Monomeren können weitere Gase oder fein verteilte Flüssigkeiten zugemischt werden, die entweder der Verdünnung, der Versprühung oder der Wärmeabführung dienen.

Als Verdünnungsmittel oder Lösungsmittel eignen sich dem Fachmann bekannte Flüssigkeiten oder verflüssigte Gase, die die Polymerisation und das Katalysatorsystem nicht nachteilig beeinflussen, insbesondere gesättigte Kohlenwasserstoffe wie Pentan, Hexan, Cyclohexan, Benzin und Petrolether.

Die Polymerisation kann bei Drücken von 0,001 bar bis 1000 bar, bevorzugt 0,1 bis 100 bar, besonders bevorzugt 1 bis 20 bar, durchgeführt werden. Im allgemeinen wird die Polymerisation bei Temperaturen von -20 bis 250°C, bevorzugt bei 0 bis 200°C, besonders bevorzugt bei 20 bis 160°C, durchgeführt.

Ein weiterer Gegenstand der Erfindung ist die Verwendung der erfindungsgemäß erhältlichen Polymerisate zur Herstellung von Formkörpern aller Art, insbesondere Folien, Platten, Schläuche, Profile, Ummantelungen, Extrudate und Spritzgussartikel. Besagte Polymerisate zeichnen sich durch eine deutlich engere Verteilung des Zahlen- und Gewichtsmittels der Molmassen aus.

Die nachfolgenden Beispiele sollen die vorliegende Erfindung sowie die Durchführung damit katalysierter Homo- und Copolymerisationsverfahren darstellen.

### Beispiele:

Alle verwendeten Chemikalien wurden, wenn nicht anders angegeben, von Aldrich bezogen.

### Beispiel 1

### Synthese von [(3,5-(CF₃)₂Ph)₂GLY]

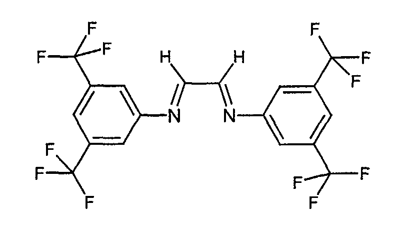

1.45g (10mmol, 40%ige Lösung in H₂O) Glyoxal werden in 20 ml Methanol vorgelegt, mit 5 Tropfen Ameisensäure versetzt und auf 0°C gekühlt. Dazu wird langsam unter Rühren eine Lösung aus 4.58g (3.12ml, 20mmol) 3,5-Bis(trifluormethyl)anilin in 20 ml Methanol getropft. Das Reaktionsgemisch trübt sich nach etwa 1h ein, nach 24h Rühren bei Raumtemperatur ist ein weißer Feststoff ausgefallen, der von der Mutterlauge abfiltriert und zweimal aus Methanol umkristallisiert wird.
Ausbeute 3.51g (73%)
¹H-NMR (200MHz, CDCl₃): 6.53 (s, 4H, Ar-Hₒᵣₜₕₒ), 7.24 (2, 2H, ArHₚₐᵣₐ), 8.07(s, 2H, N=CH) ppm.
19F-NMR(188MHz, CDCl₃): -63.24 (CF₃) ppm
IR (Nujol): 1630s, 1615m, 1280s, 1163vs, 1142vs, 960m, 906m, 883vs, 845s, 731m, 699s, 683s, 591m, 571w, 546w, 522w, 492w, 438w cm⁻¹
EI-MS: m/z= 480 (M⁺, 18%), 213 (C₈F₆H₃⁺, 100%)

### Beispiel 2

### Synthese von [(3,5-(CF₃)₂Ph)₂BUD]

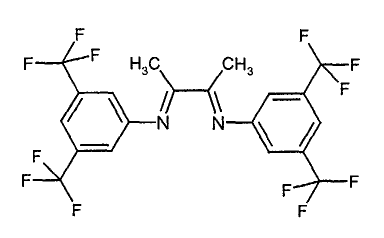

861mg (10mmol) Diacetyl werden in 20 ml Methanol vorgelegt, mit 5 Tropfen Ameisensäure versetzt und auf 0°C gekühlt. Dazu wird langsam unter Rühren eine Lösung aus 4.58g (3.12ml, 20mmol) 3,5-Bis(trifluormethyl)anilin in 20 ml Methanol getropft. Das Reaktionsgemisch wird 24h gerührt, es bildet sich ein gelber Feststoff, der abfiltriert, mit kaltem Methanol gewaschen und getrocknet wird.
Ausbeute: 3.96g (78%)
¹H-NMR (200MHz, CDCl₃): 1.81 (s, 6H, CH₃), 6.43 (s, 4H, Ar-Hₒᵣₜₕₒ), 7.64 (2, 2H, ArHₚₐᵣₐ) ppm.
19F-NMR(188MHz, CDCl₃): -63.03 (CF₃) ppm
IR (Nujol): 1618s, 1221s, 1167vs, 1138vs, 1055s, 1013w, 999m, 920w, 895m, 864m, 802w, 763w, 731m, 683s, 553w, 530w, 488w, 451w cm⁻¹
EI-MS: m/z= 508 (M⁺, 24%), 254 (C₁₀F₆H₆N⁺, 34%), 213 (C₈F₆H₃⁺, 100%)

### Beispiel 3

### Synthese von [(3,5-(CF₃)₂Ph)₂GLY]NiBr₂

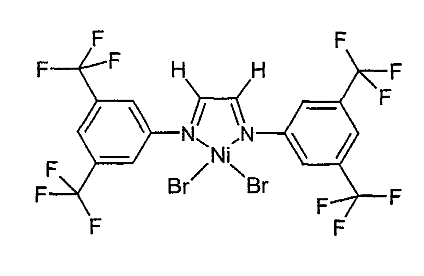

Im 250 ml Rundkolben werden unter N₂ Atmosphäre 0.2 g [1,2-Dimethoxyethan]NiBr₂ und 50 ml Dichlormethan zusammengegeben und gut aufgerührt. 0.3 g Ligand werden in 50 ml Dichlormethan gelöst und unter Rühren bei RT langsam zugetropft. Nach Ende der Zugabe wird der Versuch bei RT über Nacht gerührt. Das Lösungsmittel wird abdestilliert. Das zurück gebliebene Produkt wird 3x mit je 20 - 30 ml Diethylether gewaschen und an der Ölpumpe bis zur Massenkonstanz getrocknet.
Ausbeute: 0.31g

### Beispiel 4

### Synthese von [(3,5-(CF₃)₂Ph)₂BUD]NiBr₂

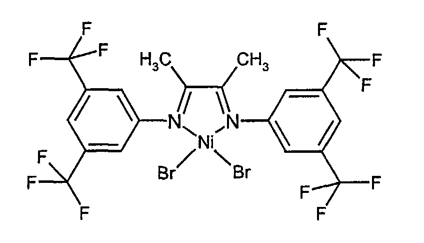

Im 250 ml Rundkolben werden unter N₂ Atmosphäre 1.0 g [1,2-Dimethoxyethan]NiBr₂ und 50 ml Dichlormethan zusammengegeben und gut aufgerührt. 1.6 g Ligand werden in 50 ml Dichlormethan gelöst und unter Rühren bei RT langsam zugetropft. Nach Ende der Zugabe wird der Versuch bei RT über Nacht gerührt. Das Lösungsmittel wird abdestilliert. Das zurück gebliebene Produkt wird 3x mit je 20 -30 ml Diethylether gewaschen und an der Ölpumpe bis zur Massenkonstanz getrocknet
Ausbeute: 1,97g

### Beispiel 5-7: Vergleichsbeispiele

### Synthese von [(2-tBuPh)₂BUD]NiBr₂

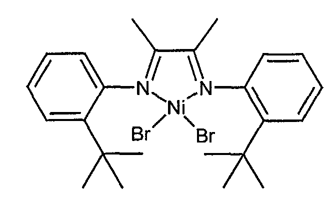

[(2-tBuPh)₂BUD]NiBr₂ wurde nach Literaturvorschrift (WO 96/23010 Beispiel 25 und 185) synthetisiert.

### Synthese von [(2-tBuPh)₂AND]NiBr₂

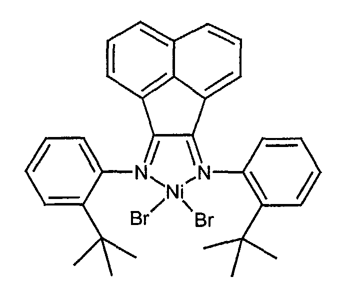

[(2-tBuPh)₂AND]NiBr₂ wurde nach Literaturvorschrift (WO 96/23010 Beispiel 26 und 186) synthetisiert.

### Synthese von [(2,6Me₂Ph)₂BUD]NiBr₂

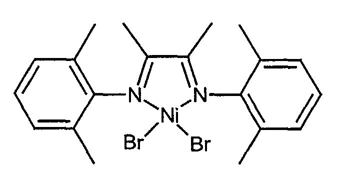

[(2,6-Me₂Ph)₂BUD]NiBr₂ wurde nach Literaturvorschrift (M. Svoboda und H. tom Dieck; J. Organomet. Chem. 191 (1980), 321-328) synthetisiert.

### Beispiel 8

### Polymerisation von Ethen

In einem sauberen und mit N₂ gespülten Reaktor werden bei Raumtemperatur 380 ml Toluol und 2.60 ml einer 10 %igen Methylaluminoxanlösung (Witco) vorgelegt und der Heizkreislauf geöffnet. Nach Erreichen der Polymeristionstemperatur werden 3.4 bar Ethen aufgepresst und die Lösung mit Ethen gesättigt. Anschließend wird die Katalysatorlösung über eine Druckbürette zugegeben und die Druckbürette wird mit 20 ml Toluol nachgespült. Nach einer Polymerisationszeit von 120 min. wird der Versuch abgekühlt und in ein mit 500 ml Ethanol vorbereiteten 2L Becherglas überführt. Der Ansatz wird mit 10 ml einer 8%igen Salzsäure versetzt, 15 min. nachgerührt, 2mal mit 200 ml Wasser ausgeschüttelt und gewaschen und anschließend werden die Phasen getrennt. Die org. Phase wird Rotationverdampfer eingeengt. Der Rückstand wird im Vakuumtrockenschrank bei 60 °C / 200 mbar getrocknet.

Für die Hochtemperatur Gelpermeationschromatographie wurden die Proben jeweils in ortho-Dichlorbenzol bei 140°C gelöst und mit einer Hochtemperatur-GPC-Anlage (Waters 150C) auf einer Kombination aus 4 *20µm*-Styroldivinylbenzol-*Linearsäulen* (L=300 mm, d=8mm) gemessen. Als interner Standard zur Flußkorrektur diente Jonol. Zur Detektion der Polymerkonzentration im Eluat wurde ein Differentialrefraktometer eingesetzt. Die quantitativen Auswertungen der Chromatogramme erfolgte auf Basis des Konzepts der universellen Eichung anhand der Mark-Houwink-Parameter für Polyethylen bei 140°C in o-Dichlorbenzol.

Die Viskosimetrie wurde bei 140°C in o-Dichlorbenzol mit Ionol als Stabilisator durchgeführt. Die Proben wurden in einem halbautomatischen Ubbelohde Kapilarviskosimeter bei drei verschiedenen Konzentrationen vermessen. Mη wurde mit Hilfe der Mark-Houwink Parameter für Polyethen aus [η] berechnet.

**Tabelle 1:**

| Ergebnisse der Polymerisation von Ethen bei 30°C, 3.4bar Ethen in Toluol. | | | | | | | | |
|---|---|---|---|---|---|---|---|---|
| Katalysator | Ausbeute [g] | Tg [°C] | Tm [°C] | M_{w} [g/mol] | Mₙ [g/mol] | M_{w}/Mₙ | Mη | CH/1000C |
| [(3,5-(CF₃)₂Ph)₂GLY]NiBr₂ | 5.0 | -30 | 81 | 842000 | 349000 | 2.3 | 599000 | 52 |
| [(3,5-(CF₃)₂Ph)₂BUD]NiBr₂ | 4.0 | -31 | 81 | 678000 | 301000 | 2.4 | 482000 | 49 |
| [(2-tBuPh)₂AND]NiBr₂ | 2.5 | | 115 | | | | 331000 | |
| [(2-tBuPh)₂BUD]NiBr₂ | 0.6 | -29 | 48 | | | | 456000 | |
| [(2,6-Me₂Ph)₂BUD]NiBr₂ | 13.8 | | 111 | | | | 203000 | |

Die in Tabelle 1 dargestellten Polymerisationsergebnisse zeigen, dass die neuen Katalysatoren, die nicht auf o-substituierten Strukturen beruhen hochaktiv für die Polymerisation von Olefinen sind. Die erhaltenen Polymere sind hochmolekular.

## Patentansprüche

1. Diimin-Übergangsmetall-Verbindungen die Arylgruppen mit elektronenziehendem/ elektronenziehenden Substituent(en) aufweisen.

2. Verbindungen gemäss Anspruch 1, welche der allgemeinen Formel (I) entsprechen 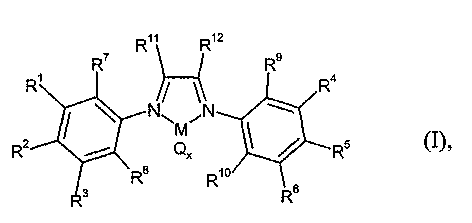 wobei
M ausgewählt wird aus Mangan, Eisen, Ruthenium, Kobalt, Rhodium, Nickel, Palladium und Kupfer,
Q ein mono-anionischer oder nicht-anionischer Ligand ist,
R¹, R², R³, R⁴, R⁵, R⁶ unabhängig voneinander ausgewählt sind aus der Gruppe bestehend aus elektronenziehender Substituent, Wasserstoff, gegebenenfalls substituierte C₁-C₁₀-Alkylgruppen, gegebenenfalls substituierter C₆-C₁₄-Arylreste und wobei gegebenenfalls ein oder mehrere R¹ bis R⁶ Teile eines Ringsystems sein können, wobei mindestens eine dieser Gruppen, bevorzugt jedoch mehrere, besonders bevorzugt mehr als 3 der Gruppen, ein elektronenziehender Substituent ist,
R⁷, R⁸, R⁹, R¹⁰ unabhängig voneinander gewählt werden aus Wasserstoff, Halogen-, C₁-C₁₀-Alkyl, C₆-C₁₄-Aryl wobei jedoch mindestens zwei der Gruppen Wasserstoff oder Halogen sind,
R¹¹und R¹² unabhängig voneinander ausgewählt werden aus Wasserstoff, Halogen, substituierter C₁-C₁₀-Alkylgruppe, substituierter C₆-C₁₄-Arylrest und wobei gegebenenfalls ein oder mehrere R¹ bis R⁶ Teile eines Ringsystems sein können oder aber über Heteroatome an die Imin-Kohlenstoffe gebunden sind,
x eine ganze Zahl im Bereich von 1 bis 3 darstellt.

3. Verbindungen gemäss Anspruch 2, **dadurch gekennzeichnet, dass**
M für Ni oder Pd,
Q für Chlorid, Bromid oder Methyl,
R¹, R³, R⁴, R⁶ unabhängig voneinander für Halogen, Perhalogenalkyl-,
R² und R⁵ für Wasserstoff, Alkyl oder Aryl,
R⁷, R⁸, R⁹, R¹⁰ für Wasserstoff,
R¹¹, R¹² für Wasserstoff, Alkyl oder Ringe , und
x für 2 oder 3 steht.

4. Verbindungen gemäss einem der Ansprüche 1-3, **dadurch gekennzeichnet, dass** als elektronenziehende Gruppe(n) eine oder mehrere Verbindungen der Gruppe Halogen-, halogenierte Alkylgruppen, Nitro-, Cyano-, Carbonyl- und Carboxylgruppen verwendet werden.

5. Zusammensetzungen enthaltend eine oder mehrere Diimin-Übergangsmetall-Verbindungen die Arylgruppen mit elektronenziehendem/ elektronenziehenden Substituent(en) aufweisen und wenigstens eine Metallkomplexkation-bildende Verbindung, sowie gegebenenfalls weiterhin ein Alkylierungsmittel.

6. Zusammensetzung gemäss Anspruch 5, **dadurch gekennzeichnet, dass** sie als Diimin-Übergangsmetall-Verbindungen eine Verbindung gemäss einem der Ansprüche 1-4 und als Metallkomplexkation-bildende Verbindung eine cyclische Aluminoxanverbindung und/oder Koordinationskomplexverbindung, ausgewählt aus der Gruppe der starken, neutralen Lewis-Säuren, der ionischen Verbindungen mit Lewis-sauren Kationen oder Brönstedt-sauren Kationen und nicht-koordinierenden Anionen, enthält.

7. Verwendung einer Zusammensetzung gemäss Anspruch 5 oder 6 als Katalysator.

8. Katalysator für die Polymerisation von Olefinen, **dadurch gekennzeichnet**, enthaltend eine Zusammensetzung gemäss Anspruch 5 oder 6 oder eine Verbindung gemäss Anspruch 1.

9. Verfahren zur Homo- oder Co-Polymerisation von Olefinen, **dadurch gekennzeichnet, dass** in Gegenwart einer Verbindung gemäss Anspruch 1 oder einer Zusammensetzung gemäss Anspruch 5 oder eines Katalysators gemäss Anspruch 8 polymerisiert wird.
